**Europäisches Patentamt**

**European Patent Office**

**Office européen des brevets**

(11) Veröffentlichungsnummer: **0 288 064 B1**

(12) # EUROPÄISCHE PATENTSCHRIFT

(45) Veröffentlichungstag der Patentschrift: **30.10.91**

(51) Int. Cl.⁵: **B01D 53/34**

(21) Anmeldenummer: **88106418.2**

(22) Anmeldetag: **21.04.88**

(54) **Umluftwäscher.**

(30) Priorität: **23.04.87 DE 3713651**

(43) Veröffentlichungstag der Anmeldung:
**26.10.88 Patentblatt 88/43**

(45) Bekanntmachung des Hinweises auf die
Patenterteilung:
**30.10.91 Patentblatt 91/44**

(84) Benannte Vertragsstaaten:
**AT BE CH DE ES FR GB IT LI NL SE**

(56) Entgegenhaltungen:
**DE-A- 2 437 213**
**DE-U- 7 932 367**
**FR-A- 1 133 296**

**STAUB REINHALTUNG DER LUFT, Band 46,
Nr. 12, Dezember 1986, Seiten 505-509, Düsseldorf; M. GRIEM: "Ionisierende Nassabschneider Entwicklungsstand und Tendenzen"**

(73) Patentinhaber: **Burger, Thomas F.**
**Wolfratshauser Strasse 45j**
**W-8023 Pullach(DE)**

Patentinhaber: **Collins, David Michael**
**27A Woodlands Avenue Emerson Park**
**Hornchurch Essex(GB)**

Patentinhaber: **Collins, Stephen Mark**
**27A Woodlands Avenue Emerson Park**
**Hornchurch Essex(GB)**

Patentinhaber: **Burger, Manfred R.**
**Wolfratshauser Strasse 45j**
**W-8023 Pullach(DE)**

(72) Erfinder: **Burger, Thomas F.**
**Wolfratshauser Strasse 45j**
**W-8023 Pullach(DE)**
Erfinder: **Collins, David Michael**
**27A Woodlands Avenue Emerson Park**
**Hornchurch Essex(GB)**
Erfinder: **Collins, Stephen Mark**
**27A Woodlands Avenue Emerson Park**
**Hornchurch Essex(GB)**
Erfinder: **Burger, Manfred R.**
**Wolfratshauser Strasse 45j**
**W-8023 Pullach(DE)**

(74) Vertreter: **TER MEER - MÜLLER - STEINMEISTER & PARTNER**
**Mauerkircherstrasse 45**
**W-8000 München 80(DE)**

## Beschreibung

Die Erfindung betrifft einen Umluftwäscher gemäß dem Oberbegriff des Patentanspruchs 1.

Waschvorrichtungen zur Reinigung von beispielsweise mit toxischen Festpartikeln und Giftstoffen in Gas- oder Flüssigkeitsphase belasteten Gasströmen (insbesondere Luft) sind in vielfältigen Ausführungsformen bekannt. Zur Reinigung wird dem schadstoffbelasteten Gasstrom in der Waschvorrichtung eine Reinigungsflüssigkeit in feinversprühter, verdampfter oder vernebelter Form zugesetzt, im allgemeinen Wasser unter Zusatz eines Additivs, insbesondere solche mit chemischer Bindungswirkung. Solche additiven Zusätze sind bekannt, beispielsweise Alkohol, Gaslöser, neutralisierende Substanzen und dergleichen. Bei inniger Vermischung etwa durch Verwirbelung, werden die Schadstoffe aus dem belasteten Gasstrom herausgelöst und entweder in einer Filtervorrichtung oder einer Kondensationseinrichtung oder beidem zurückgehalten und abgeführt. Die schadstoffbeladene Waschflüssigkeit muß entsorgt werden. Dabei stellen die anfallenden Mengen an schadstoffbeladener Waschflüssigkeit ein erhebliches Problem dar, und zwar aus folgendem Grund:

Bei bisher bekannten Gaswäschern stellt sich in Abhängigkeit von der Temperatur im Kondensationsbereich immer automatisch eine 100 %-ige Gasfeuchtigkeit (Luftfeuchtigkeit) ein. Dies läßt sich auf einfache Weise aus dem bekannten Mollier-Diagramm ablesen. Bei normalen Umgebungstemperaturen werden beispielsweise 3 m³ Waschflüssigkeit pro 1000 m³/h Luft benötigt. Bei der kontinuierlichen Reinigung eines größeren Raums, etwa in einem Chemiebetrieb, in dem toxische Gase oder Staubpartikel in großem Umfang anfallen, muß auch eine entsprechend große Menge an schadstoffbelasteter Waschflüssigkeit entsorgt werden.

Ein weiterer Nachteil bisher bekannter Gaswäscher besteht auch darin, daß ein Umluftbetrieb nur mit erhöhtem Aufwand möglich ist. Der zur reinigende Gasstrom muß gekühlt werden, um eine ausreichende Kondensation der Waschflüssigkeit sicherzustellen.

Weiterhin haben bisher bekannte Luftwäscher im allgemeinen den Nachteil, daß sich Feststoffe nur bis zu einer Partikelgröße von ca. 10 bis ca. 50 μm entfernen lassen. Für kleinere Partikelgrößen ist eine zusätzliche Reinigungsvorrichtung, beispielsweise ein elektrostatisch betriebenes Aktivkohlefilter, erforderlich.

Der Erfindung liegt damit die Aufgabe zugrunde, einen Umluftwäscher zu schaffen, der
- vergleichsweise sehr wenig Waschflüssigkeit benötigt,
- sich zur Entfernung auch von sehr kleinen Feststoffpartikeln im Bereich von 5 μm und weit darunter eignet und
- für einen Umluftbetrieb geeignet ist.

Die Erfindung ist bei einem Umluftwäscher mit einer Einrichtung zur Einspeisung einer Waschflüssigkeit in feinverteilter Form in den angesaugten Luftstrom, einer Hochspannungs-Ionisierungsvorrichtung zur Ionisierung des Luftstroms, einer Abführeinrichtung für die beladene Waschflüssigkeit sowie mit einer Vorrichtung zur Förderung eines Luftstroms durch den Luftwäscher zwischen einer Luftansaugöffnung und einer Luftaustragöffnung dadurch gekennzeichnet, daß im Luftstrom stromab von der Ionisierungseinrichtung wenigstens eine drehbar gelagerte Rundbürste mit einer im wesentlichen parallel zum Luftstrom ausgerichteten Rotationsachse angeordnet ist, die elektrisch auf Gegenpotential zum Potential der Ionisierung liegt und mit so hoher Drehzahl antreibbar ist, daß neben einer elektrostatischen Entladung an oder in der Bürste eine Kondensation der schadstoffbeladenen Waschflüssigkeit auftritt.

Vorteilhaft ist es, mehrere trommel- oder scheibenförmige Rundbürsten hintereinander auf einer gemeinsamen Antriebsachse vorzusehen. Die Drehzahl des Antriebsmotors für die Rundbürste(n) wird vorzugsweise in Abhängigkeit von der Feuchte (relativen Feuchtigkeit) des angesaugten schadstoffbelasteten Gasstroms geregelt. Dazu wird die relative Luftfeuchtigkeit im Ansaugbereich durch einen Feuchtigkeitssensor erfaßt. Vorteilhaft kann es auch sein, die Rundbürsten (beispielsweise zwei) auf zwei koaxialen Achsen zu lagern und mit unterschiedlichen Drehzahlen anzutreiben.

Weitere vorteilhafte Einzelheiten und Ergänzungen des Erfindungsgedankens sind in abhängigen Patentansprüchen gekennzeichnet und werden in der nachfolgenden Beschreibung erläutert.

Der erfindungsgemäße Luftwäscher zeichnet sich vor allem dadurch aus, daß nur vergleichsweise sehr geringe Mengen an Waschflüssigkeit erforderlich sind, so daß er sich gut für einen Umluftbetrieb eignet. Versuche haben ergeben, daß auch Partikel im Größenbereich unter 1 μm entfernbar sind; selbstverständlich auch toxische Gase, die gut gebunden und durch einen zusätzlichen Kondensationseffekt zuverlässig entfernt werden.

Die Wirkung des erfindungsgemäßen Luftwäschers beruht vor allem darauf, daß nicht nur eine elektrische Entladung bzw. elektrostatische Bindungswirkung durch die auf Gegenpotential zur Ionisierung liegende(n) Bürste(n) eintritt, sondern außerdem durch eine vergleichsweise sehr hohe Rotation der Bürste(n) der Dampf bzw. die Feuchtepartikel der schadstoffbelasteten Waschflüssigkeit an oder in der Bürste kondensieren und/bzw. durch extreme Strömungsumlenkung und Beschleunigung quasi "ausgeschlagen" werden. Als besonderer Vorteil zeigt sich dann, daß auf der Austrittsseite des Umluftwäschers die gereinigte Luft (das gereinigte Gas) praktisch trocken ist, so daß eine zusätzliche Kondensation zur Entfernung von Waschflüssigkeit entbehrlich wird. In jedem Fall ist die Luftfeuchtikeit auf der Austrittseite wesentlich geringer als auf der Ansaugseite, so daß selbst dann, wenn auf der Gaseintrittsseite eine sehr hohe relative Feuchtigkeit vorliegt, im Regelfall auf der Austrittseite keine zusätzlichen Kondensationsmaßnahmen erforderlich werden.

Gegenüber bekannten Luftwäschern hat die Erfindung vor allem den weiteren Vorteil, daß nur eine vergleichsweise sehr geringe Menge an Waschflüssigkeit benötigt wird. Versuche haben ergeben, daß ca. 2 bis 3 Liter Waschflüssigkeit pro 1000 m³/h Luft im allgemeinen ausreichend sind. Daraus folgt, daß die Entsorgung der Waschflüssigkeit wesentlich einfacher und billiger wird, da sehr viel geringere Mengen an schadstoffbeladener Waschflüssigkeit entsorgt werden müssen.

Die Erfindung und vorteilhafte Einzelheiten werden nachfolgend unter Bezug auf ein Ausführungsbeispiel näher erläutert.

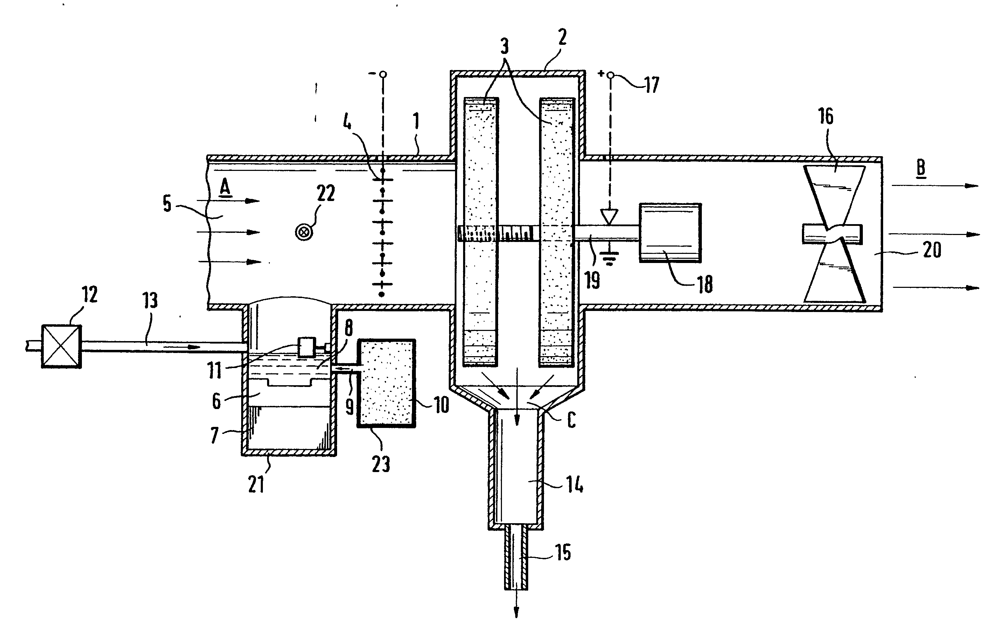

Die einzige Figur zeigt in einer Schnittdarstellung den prinzipiellen Aufbau eines für Umluftbetrieb geeigneten Luftwäschers gemäß der Erfindung.

Das Gehäuse 1 des Umluftwäschers ist beispielsweise in Form eines Rohrs gestaltet mit einer axialen, flanschartigen Erweiterung 2. Die Ansaugung eines schadstoffbelasteten Luftstroms A erfolgt von links (bei 5), gefördert durch einen Saug-/Drucklüfter 16. Der Austritt des gereinigten Luftstroms B erfolgt auf der rechten Seite (bei 20).

Im Ansaugbereich 5 ist eine an sich bekannte elektrostatische Ionisierungsvorrichtung 4 vorgesehen, die in Form von Ionisierungsdrähten angedeutet ist, die quer zum angesaugten Luftstrom A gespannt, isoliert im Gehäuse 1 gehaltert und beispielsweise mit dem Minuspol einer (nicht gezeigten) Hochspannungsquelle verbunden sind. Die Ionisierungsspannung liegt vorzugsweise im Bereich von 12 kV bis ca. 30 kV. Versuche haben ergeben, daß eine Ionisierungsspannung im Bereich von ca. 15 kV gute Ergebnisse liefert für eine Luftreinigungsvorrichtung mit einem Durchsatzvolumen von beispielsweise 1000 m³/h. Stromauf von der Ionisierungsvorrichtung 4, also in Gasströmungsrichtung näher beim Gaseintritt 5 liegend, ist eine Einpseisevorrichtung für eine Waschflüssigkeit vorgesehen, die folgende Teile und Baugruppen umfaßt: Eine Einspeiseleitung 13 für Wasser (H₂O) mit einem automatisch betätigbaren Zulaufventil 12, einem Ultraschallzerstäuberkopf 6 unterhalb des Spiegels der Waschflüssigkeit 8 in einem Behälter 21, der nach oben, d.h. zum eintrittsseitigen Gasstrom A, offen ist, eine bekannte Steuer- und Erregerelektronik 7 für den Ultraschallwandlerkopf 6, einen Flüssigkeitsspiegelfühler 11, beispielsweise einen Schwimmer, von dem aus das Einlaßventil 12 gesteuert wird, sowie einen Behälter 22 mit einem additiven Zusatz 10 (Additiv), der über eine Leitung 9 in die Waschflüssigkeit 8 dosiert eingespeist wird. Die Dosierung erfolgt in Abstimmung auf den durch den Schwimmer 11 bestimmten Wasserzulauf über die Leitung 13. Die mit Additiven, also beispielsweise toxische Gase bindenden Zusätzen versehene Waschflüssigkeit 8 gelangt, durch den Ultraschallwandlerkopf 6 vernebelt, in den beladenen Luftstrom A. Anstelle eines Ultraschallzerstäubers kann auch ein Dampferzeuger verwendet werden. Die Waschflüssigkeitspartikel und die Schadstoffpartikel im Luftstrom A werden durch die Ionisierungsvorrichtung 4 ionisiert und gelangen dann unter der Wirkung des Lüfters 16 in den axial erweiterten Bereich 2, in dem sich eine Anordnung von Rundbürsten 3 (im dargestellten Beispiel zwei Rundbürsten) befindet. Die Rundbürsten 3 werden über eine gemeinsame, im wesentlichen parallel zum Luftstrom ausgerichtete Achse 19 mit hoher Drehzahl durch einen Antriebsmotor 18 angetrieben. Die Drehzahl der Achse 19 und damit der Rundbürsten 3 liegt im Bereich von 1000 bis 20000 Upm; die Drehzahl wird vorzugsweise in Abhängigkeit von der durch einen Feuchtigkeitsfühler 22 im Lufteintrittsbereich A erfaßten Feuchte (relative Feuchtigkeit) reguliert. Möglich und hinsichtlich des Kondensationseffekts bzw. der Trocknung des Gasstroms vorteilhaft ist es auch, die beiden Rundbürsten 3 mit unterschiedlichen Drehzahlen anzutreiben. In diesem Fall wird die stromab, also näher zum Motor 18 liegende Rundbürste über eine Hohlachse (Hohlwelle) mit beispielsweise höherer Drehzahl angetrieben, während die zum Lufteintritt 5 hin angeordnete Rundbürste von einer die Hohlachse durchsetzenden Starrachse über ein Untersetzungsgetriebe mit niedrigerer Drehzahl betrieben wird. Die Rundbürsten 3 werden insbesondere über ihre Antriebsachse mit einem zum Ionisierungspotential bei 4 entgegengesetzten Potential beaufschlagt, also mit dem entgegengesetzten Pol der (nicht gezeigten) Hochspannungsquelle verbunden, beispielsweise mit dem Pluspol (Masse) im gewählten Ausführungsbeispiel. Als Material für die Rundbürsten 3 kommen alle für hohe Beschleunigungskräfte geeigneten Materialien, insbesondere bestimmte Polyamid-Kunststoffmaterialien, in Frage, die sich wenigstens geringfügig oberflächenseitig leitend verhalten können. Diese letztgenannte Voraussetzung ist bei allen bisher getesteten Bürstenmaterialien gegeben.

Im unteren Bereich der axialen Erweiterung 2 werden die durch die hohe Rotation der Bürsten 3 kondensierten und/bzw. nach außen geschleuderten schadstoffbelasteten Waschflüssigkeitspartikel bei C gesammelt und über einen Sammelbehälter 14 und eine Austragleitung 15 zur Entsorgung abgeführt.

Die Wirkung des erfindungsgemäßen, auch als "Ultraschall-Umluft-Bürstenwäscher mit Ionisierungseinrichtung" zu bezeichnenden Gaswascheinrichtung ist zweifach. Zum einen wirken die Bürsten 3 elektrostatisch anziehend auf die schadstoff- und mit Waschflüssigkeit beladene ionisierte Luft. Zum anderen wirken die mit vergleichsweise hoher Drehzahl angetriebenen Bürsten als Kondensationseinrichtung und als Schleuder auf die beladenen Luftpartikel bzw. Gase. Durch die starke Umlenkung im Bereich der Bürsten 3 und Beschleunigung wird eine extrem hohe g-Zahl erreicht, so daß bei gleichzeitiger Entladung der mit Schadstoffpartikeln bzw. toxischen Gase beladene Waschflüssigkeitsnebel bzw. -dampf kondensiert und radial nach außen bewegt und abgeleitet wird.

Als wesentliche Vorteile gegenüber bekannten Luftwäschern seien die folgenden genannt:

- Mit der Erfindung wird eine Umluftreinigung möglich, was mit bisher bekannten Wäschern nicht möglich war.
- Es wird nur eine vergleichsweise sehr geringe Menge an Waschflüssigkeit benötigt, typischerweise 2 bis 3 Liter/1000 m³/h im Gegensatz zu bisherigen Luftwäschern, bei denen mit feuchtigkeitsgesättigter Luft gearbeitet werden muß, wofür beispielsweise 3 m³ Waschflüssigkeit je 1000 m³/h Luft benötigt werden. Daraus folgt, daß die Entsorgung der Waschflüssigkeit bedeutend billiger wird, da wesentlich geringere Mengen an beladener Waschflüssigkeit entsorgt werden müssen.
- Es lassen sich Partikelgrößen unter 1 $\mu$m entfernen im Gegensatz zu maximal reinigbaren Partikelgrößen von 10 bis 50 $\mu$m bei bekannten Luftwäschern.
- Durch die sehr hohe Rotation der Bürsten werden die Feuchtepartikel kondensiert und/bzw. durch extreme Beschleunigung "ausgeschlagen". Auf der Austrittseite ist die Luft praktisch trocken; in jedem Fall aber ist die Luftfeuchtigkeit wesentlich geringer als auf der Ansaugseite.

**Patentansprüche**

1. Umluftwäscher mit
   - einer Einrichtung (6, 7, 11, 12, 13) zur Einspeisung einer Waschflüssigkeit in feinverteilter Form in einen angesaugten Luftstrom (A),
   - einer Hochspannungs-Ionisierungseinrichtung (4, 17) zur Ionisierung des Luftstroms,
   - einer Abführeinrichtung (14, 15) für die beladene Waschflüssigkeit (C) sowie mit

   - einer Vorrichtung (16) zur Förderung eines Luftstroms durch den Luftwäscher zwischen einer Luftansaugöffnung (bei A) und einer Luftaustragöffnung (bei B),
   **dadurch gekennzeichnet, daß**
   - im Luftstrom stromab von der Ionisierungseinrichtung (4, 17) wenigstens eine drehbar gelagerte Rundbürste (3) mit einer im wesentlichen parallel zum Luftstrom (A→B) ausgerichteten Rotationsachse (19) angeordnet ist, die elektrisch auf Gegenpotential zum Potential der Ionisierung liegt und mit mindenstens 1000 Upm antreibbar ist, so daß neben einer elektrostatischen Entladung an oder in der Bürste eine Kondensation der schadstoffbeladenen Waschflüssigkeit auftritt.

2. Umluftwäscher nach Anspruch 1,
   **dadurch gekennzeichnet, daß** die Rundbürste (3) im Bereich einer axialen Erweiterung (2) des Luftströmungswegs angeordnet ist und einen Radius aufweist, der größer ist als der Luftströmungsquerschnitt vor und hinter der Rundbürste (3).

3. Umluftwäscher nach Anspruch 1,
   **dadurch gekennzeichnet, daß** die Waschflüssigkeit durch einen Ultraschallzerstäuber (6) vernebelt und in den angesaugten Luftstrom (A) eingespeist wird.

4. Umluftwäscher nach Anspruch 1,
   **dadurch gekennzeichnet, daß** die Waschflüssigkeit durch einen Dampferzeuger erhitzt und in Dampfform in den angesaugten Luftstrom (A) eingespeist wird.

5. Umluftwäscher nach Anspruch 3 oder 4,
   **gekennzeichnet durch** eine Vorrichtung (9, 10) zur Zugabe wenigstens eines Additivs zur Waschflüssigkeit (8).

6. Umluftwäscher nach Anspruch 2,
   **gekennzeichnet durch** eine radial außerhalb der Rundbürste (3) vorgesehene Sammel- und Abführvorrichtung (14, 15) für die durch die rotierende Bürste (3) umgelenkten und radial nach außen geschleuderten, schadstoffbeladenen Flüssigkeitspartikel.

7. Umluftwäscher nach einem der vorstehenden Ansprüche,
   **dadurch gekennzeichnet, daß** mehrere Rundbürsten (3) axial hintereinander angeordnet sind.

8. Umluftwäscher nach Anspruch 7,

**dadurch gekennzeichnet,** daß die Rundbürsten (3) auf einer gemeinsamen Antriebsachse (19) fixiert sind.

9.  Umluftwäscher nach Anspruch 7,
    **dadurch gekennzeichnet,** daß die Rundbürsten (3) über koaxiale Antriebsachsen mit unterschiedlicher Geschwindigkeit antreibbar sind.

10. Umluftwäscher nach Anspruch 8 oder 9,
    **dadurch gekennzeichnet,** daß die Drehzahl(en) der Rundbürsten (3) in Abhängigkeit von der Feuchte der angesaugten Luft (A) veränderbar ist (sind).

11. Umluftwäscher nach Anspruch 10,
    **dadurch gekennzeichnet,** daß die Drehzahl der Rundbürsten (3) im Bereich von 1000 bis 20000 Upm veränderbar ist.

12. Umluftwäscher nach Anspruch 11,
    **dadurch gekennzeichnet,** daß die Rundbürsten (3) bei einer durchschnittlichen Drehzahl von 1400 bis 3000 Upm betrieben werden.

13. Umluftwäscher nach einem der vorstehenden Ansprüche,
    **gekennzeichnet durch** eine Überwachungsvorrichtung (11) für einen Flüssigkeitsspiegel in der Einspeisevorrichtung für die Waschflüssigkeit (8).

**Claims**

1.  Circulation air washer having
    - an apparatus (6, 7, 11, 12, 13) for feeding a washing liquid in finely distributed form into an intake air current (A),
    - a high voltage ionization apparatus (4, 17) for the ionization of the air current,
    - a discharge apparatus (14, 15) for the charged washing liquid (C) and
    - a device (16) for conveying an air current through the air washer between an air intake aperture (at A) and an air discharge aperture (at B),
    **characterised in that**
    - in the air current, downstream from the ionization apparatus (4, 17), there is arranged at least one rotatably mounted circular brush (3) having a rotating shaft (19) aligned substantially parallel to the air current (A → B), which rotating shaft is electrically at opposite potential to the potential of the ionization and can be driven at at least 1,000 r.p.m., so that, as well as an electrostatic discharge at or in the brush, condensation of the contaminant-laden washing liquid occurs.

2.  Circulation air washer according to claim 1, **characterised in that** the circular brush (3) is arranged in the region of an axial expansion (2) of the air flow path and has a radius which is greater than the air flow cross section in front of and behind the circular brush (3).

3.  Circulation air washer according to claim 1, **characterised in that** the washing liquid is atomized by means of an ultrasonic atomizer (6) and fed into the intake air current (A).

4.  Circulation air washer according to claim 1, **characterised in that** the washing liquid is heated by means of a steam generator and is fed in the form of vapour into the intake air current (A).

5.  Circulation air washer according to claim 3 or 4, **characterised by** a device (9, 10) for the addition of at least one additive to the washing liquid (8).

6.  Circulation air washer according to claim 2, **characterised by** a collecting and discharging device (14, 15) provided outside the circular brush (3) for the contaminant-laden liquid particles which are deflected by the rotating brush (3) and flung radially outwards.

7.  Circulation air washer according to one of the preceding claims, **characterised in that** several circular brushes (3) are arranged axially one behind another.

8.  Circulation air washer according to claim 7, **characterised in that** the circular brushes (3) are attached to a common drive shaft (19).

9.  Circulation air washer according to claim 7, **characterised in that** the circular brushes (3) can be driven by way of coaxial drive shafts at varying speed.

10. Circulation air washer according to claim 8 or 9, **characterised in that** the rotational speed(s) of the circular brushes (3) can be altered in dependence upon the dampness of the intake air (A).

11. Circulation air washer according to claim 10, **characterised in that** the rotational speed of the circular brushes (3) can be altered within the range of 1,000 to 20,000 r.p.m.

**12.** Circulation air washer according to claim 11, **characterised in that** the circular brushes (3) are driven at an average rotational speed of 1,400 to 3,000 r.p.m.

**13.** Circulation air washer according to one of the preceding claims, **characterised by** a monitoring device (11) for a liquid level in the feeding device for the washing liquid (8).

## Revendications

**1.** Laveur d'air en circulation, comprenant
- un dispositif (6, 7, 11, 12, 13) pour l'introduction d'un liquide de lavage finement dispersé dans un courant d'air (A) aspiré,
- un dispositif d'ionisation à haute tension (4, 17) pour l'ionisation du courant d'air,
- un dispositif d'évacuation (14, 15) pour le liquide de lavage chargé (C) ainsi que
- un dispositif (16) pour le refoulement d'un courant d'air à travers le laveur d'air entre un orifice d'aspiration (en A) et un orifice d'évacuation d'air (en B),

**caractérisé en ce** que
- dans le courant d'air, en aval du dispositif d'ionisation (4, 17) est disposée au moins une brosse circulaire (3) tournante dont l'axe de rotation (19) est orienté sensiblement parallèlement au courant d'air (A → B), dont le potentiel électrique est opposé au potentiel de l'ionisation et qui peut être entraînée à une vitesse d'au moins 1000 tours/min, de façon à obtenir, en plus d'une décharge électrostatique sur ou dans la brosse, une condensation du liquide de lavage chargé d'éléments polluants.

**2.** Laveur d'air en circulation selon la revendication 1, caractérisé en ce que la brosse circulaire (3) est disposée dans la région d'un élargissement axial (2) du parcours d'écoulement d'air et qu'elle présente un rayon qui est plus grand que la section de passage de l'air en amont et en aval de la brosse circulaire (3).

**3.** Laveur d'air en circulation selon la revendication 1, caractérisé en ce que le liquide de lavage est atomisé par un atomiseur à ultrasons (6) et injecté dans le courant d'air (A) aspiré.

**4.** Laveur d'air en circulation selon la revendication 1, caractérisé en ce que le liquide de lavage est chauffé par un générateur de vapeur et injecté sous forme de vapeur dans le courant d'air (A) aspiré.

**5.** Laveur d'air en circulation selon l'une des revendications 3 ou 4, caractérisé en ce qu'il comprend un dispositif (9, 10) pour l'addition d'au moins un additif au liquide de lavage (8).

**6.** Laveur d'air en circulation selon la revendication 2, caractérisé en ce qu'il comprend, radialement à l'extérieur de la brosse circulaire (3), un dispositif de collecte et d'évacuation (14, 15) pour les particules de liquide chargées d'éléments polluants déviées par la brosse circulaire (3) en rotation et projetées radialement vers l'extérieur.

**7.** Laveur d'air en circulation selon l'une quelconque des revendications précédentes, caractérisé en ce que plusieurs brosses circulaires (3) sont disposées axialement les unes derrière les autres.

**8.** Laveur d'air en circulation selon la revendication 7, caractérisé en ce que les brosses circulaires (3) sont montées sur un axe d'entraînement (19) commun.

**9.** Laveur d'air en circulation selon la revendication 7, caractérisé en ce que les brosses circulaires (3) peuvent être entraînées à des vitesses différentes par l'intermédiaire d'axes d'entraînement coaxiaux.

**10.** Laveur d'air en circulation selon l'une des revendications 8 ou 9, caractérisé en ce que la (les) vitesse(s) de rotation de la (des) brosse(s) circulaire(s) (3) peut (peuvent) être variée(s) en fonction de l'humidité de l'air (A) aspiré.

**11.** Laveur d'air en circulation selon la revendication 10, caractérisé en ce que la vitesse de rotation des brosses circulaires (3) peut être variée à l'intérieur de la plage de 1000 à 20000 tours/min.

**12.** Laveur d'air en circulation selon la revendication 11, caractérisé en ce que les brosses circulaires (3) fonctionnent à une vitesse de rotation moyenne de 1400 à 3000 tours/min.

**13.** Laveur d'air en circulation selon l'une quelconque des revendications précédentes, caractérisé en ce qu'il comprend un dispositif de surveillance (11) pour un niveau de liquide dans le dispositif d'injection pour le liquide de lavage (8).

EP 0 288 064 B1